Europäisches Patentamt

European Patent Office

Office européen des brevets

(19)

(11) Publication number: **0 046 336**
A2

(12) **EUROPEAN PATENT APPLICATION**

(21) Application number: **81303268.7**

(22) Date of filing: **16.07.81**

(51) Int. Cl.³: **A 01 N 25/24, A 01 N 25/34**

(30) Priority: **14.08.80 US 178067**

(43) Date of publication of application: **24.02.82**
**Bulletin 82/8**

(84) Designated Contracting States: **AT BE CH DE FR GB IT LI LU NL SE**

(71) Applicant: **ZOECON CORPORATION, 975 California Avenue, Palo Alto California 94303 (US)**

(72) Inventor: **Greene, Lawrence C., 3651 Orinda, Palo Alto CA 94306 (US)**

(74) Representative: **Harrison, David Christopher et al, MEWBURN ELLIS & CO 2/3 Cursitor Street, London EC4A 1BQ (GB)**

(54) **Composition and method for the control of insects.**

(57) Any suitable insecticide is made up of a waxy composition so that it may be applied to a surface as a thin film by rubbing the composition, preferably in the form of a crayon, against the surface. Preferred thickeners of the composition are stearic monoethanolamides. Lubricants and other ingredients may also be incorporated.

EP 0 046 336 A2

0046336

## COMPOSITION AND METHOD FOR THE
## CONTROL OF INSECTS

This invention relates to a novel formulation and method for the control of insects.

Insects such as cockroaches and ants are a continual problem in, for example, homes and institutions. They are difficult to control since they find harborage in many different areas, such as behind or under cabinets or appliances, along baseboards and under sinks and countertops. They will readily move to new areas if the harborage becomes unacceptable. The principal methods presently available for control of such pests are aerosol sprays, baits, and tapes, each of which has disadvantages.

Aerosol products for the most part do not have a long residual activity. Also, the spray from aerosols is broadcast widely, going on to surfaces where protection is not sought or where presence of the active ingredient is not wanted. Furthermore, there are flammability and environmental (ozone layer degradation) concerns connected with the propellants of aerosols.

Baits provide protection only in a small area surrounding the bait, and insects can easily avoid them. Also, baits cannot be placed in all areas where the insects might walk or find harborage, such as around the periphery of cabinet doors, on the undersides of countertops, or at junctions between counters and built-in appliances. They may not be placed where children or pets could find and eat them.

Tapes provide the disadvantage that unless the tapes are placed end-to-end in a continuous strip along all areas, insects can walk around the tape and thus avoid the insecticide. Preventing this can require a large number of tapes and a great deal of time for application. Furthermore, the tapes are highly visible.

The composition and method of the present invention are characterised by: high effectiveness against crawling insects, such a Blattella germanica (German cockroach) and Periplaneta americana (American cockroach); long residual activity; ease and convenience of use; can be applied to any surface; accurate and exact placement; and coverage of a large surface area.

The insecticide of the present invention is a solid waxy composition in which is incorporated an appropriate amount of an insecticide, and is preferably presented in the form of a crayon. When it is rubbed on a surface to be treated a thin invisible film of the composition is left.

The insecticide or active ingredient in the compositions of the present invention can be chosen from an insecticide that is physically and chemically stable in the formulation. This includes, but is not limited to, the synthetic pyrethroids, such as permethrin [(3-phenoxyphenyl)methyl 3-(2,2-dichloro-ethenyl)-2,2-dimethylcyclopropanecarboxylate], fenvalerate [α-cyano-3-phenoxybenzyl 2-(4-chlorophenyl)-3-methylbutanoate], the compound α-cyano-3-phenoxybenzyl 2-(4-difluoromethoxyphenyl)-3-methylbutanoate, the compound α-cyano-3-phenoxybenzyl 2-(2-fluoro-4-trifluoromethylphenylamino)-3-methylbutanoate, and fluvalinate [α-cyano-3-phenoxybenzyl 2-(2-chloro-4-trifluoromethylphenylamino)-3-methylbutanoate]; the carbamates, such as propoxur [2-isopropoxyphenyl methylcarbamate], carbaryl [1-naphthyl N-methylcarba-mate], bendiocarb [2,2-dimethyl-1,3-benzodioxol-4-yl methylcarbamate] and methomyl [N- (methylamino) carbonyl]oxy]ethanimidothioate]; insect growth regulators, such as methoprene [isopropyl (E,E)-11-methoxy-3,7,11-trimethyl-2,4-dodecadienoate],
hydroprene [ethyl (E,E)-3,7,11-trimethyl-2,4-dodeca-
dienoate]and kenoprene [2-propynyl (E,E)-3,7,11-trimethyl-2,4-dodecadienoate]; the phosphates, such as
fenitrothion [O,O-dimethyl O-(4-nitro-m-tolyl)-
phosphorothioate], phosmet [O,O-dimethyl S-phthalimido-
methyl phosphorodithioate] and chlorpyrifos [O,O-
diethyl O- (3,5,6-trichloro-2-pyridyl) phosphorothiate];
and the chorinated pesticides, such as lindane
[1,2,3,4,5,6 -hexachlorocyclohexane]. The concentration
of the active ingredient present in the formulation
can range from 0.1 to 30 percent, but more usually is
in the range of 0.5 to 15 percent, by weight, of the
total composition. A single active ingredient or a
mixture of active ingredients may be included in the
formulation.

The wax-like composition of the present invention
comprises, in addition to the insecticide, a
thickening agent, preferably selected from the
monoethanolamides of fatty acids, saturated or
unsaturated, of fifteen to twenty-two carbon atoms.
The monoethanolamides are preferred because of their
desirable characteristics of substantially neutral
pH and being relatively invisible and not flaky on
household surfaces.

The term "thickening agent" means a single thickening
agent, such as stearic monoethanolamide, and a mixture of
two or more thickening agents, such as coconut
monoethanolamide plus stearic monoethanolamide.

Depending on the insecticide used and the
physical and cosmetic characteristics of the final
product desired, other components may optionally be
included, such as a pH adjuster and one or more lubricants
or "lubricity agents" chosen from, for example, water,
silicon, mineral oil or propylene glycol ether or a mixture of them. Whether a pH adjuster is needed or not depends upon the particular active ingredient employed in the formulation. The most desirable pH of the formulation is readily determinable by those of ordinary skill in the art based on the chemistry of the active ingredient.

The total amount of the thickening agent, either a single component or more than one component, may range from about 20 to 99 percent, by weight, of the total composition but is most usually between 30 and 70 percent.

In the preferred embodiment of this invention, a lubricity agent or combination of lubricity agents is included to make the formulation easier to rub onto a surface and to allow a smooth, thin film of the formulation to be laid down upon application. The amount of lubricity agent or agents employed, when present, is up to 75 percent, by weight, of the total composition and preferably from about 25 to 65 percent.

Depending on the active ingredient employed, a pH adjuster may be required to make the formulation neutral or slightly acidic. For example, when permethrin is included as the active ingredient, the formulation should be at a pH of 4 to 7 for optimum stabilization of the active ingredient.

In one way of making the insecticide composition the active ingredient, along with any lubricants and/or pH adjuster, is heated, and the thickening agent(s) is added and melted. The resulting homogeneous liquid is partially cooled, then poured into a suitable mould or container of the desired shape, size and material. This is allowed to cool to a solid.

In a preferred practice, the composition is moulded into a stick of the nature of a crayon for ease of handling and application. The crayon may be cylindrical or polygonal of three or more sides having a diameter or cross-section of 1-2 inches and a length of 3-4 inches or more, although it need not be limited to these dimensions. The crayon may be surrounded by a strippable, protective wrapping such as paper or plastic or may be enclosed in an applicator container having an adjustable base whereby the crayon can be easily advanced and retracted.

In use the formulation containing the active ingredient in an insecticidally effective amount, is rubbed onto the surface to be treated, usually along areas where the target insects have been seen or where they may find harborage. A thin film of the formulation is thereby deposited on the surface of, e.g., a baseboard or inner surface of storage cabinets which thus provides a point of contact for control of the insects. Without any intention of being bound by theory, it is believed that the formulation is effective by reason of the insect walking or crawling over the film and the insecticide then is ingested by the insect or absorbed through the cuticle of the insect.

A formulation of the present invention may also be used to provide protection against fleas for pet animals by rubbing the formulation on the coats of the animals. Particularly advantageous compounds as active ingredients in this embodiment are the insect growth regulators, such as methoprene. In the same manner, animals such as horses and cows may be protected against flies such as face flies.

The following examples are provided to illustrate the practice of the present invention. Temperature is in degrees Centigrade.

0046336

## Example 1

| Ingredient | Weight % |
|---|---|
| Stearic monoethanolamide [a] | 26.0 |
| Stearic monoethanolamide stearate [b] | 12.2 |
| Propylene glycol-3-myristyl ether [c] | 15.2 |
| Mineral oil | 36.0 |
| Petrolatum | 6.0 |
| (3-Phenoxyphenyl)methyl($\pm$)cis/trans-3-(2,2-dichloroethenyl)-2,2-dimethylcyclopropane-carboxylate [d] | 2.6 |
| Stearic acid | 2.0 |

a Witcamide 70 (Witco Chemical)
b Witcamide MAS (Witco Chemical)
c Witconol APM (Witco Chemical)
d Permethrin - cis/trans isomer ratio = 75/25 $\pm$ 5

The propylene glycol ether, mineral oil, petrolatum and (3-phenoxyphenyl)methyl 3-(2,2-dichloroethenyl)-2,2-dimethylcyclopropanecarboxylate are added to a container equipped with a stirrer, a thermometer and a heating device. The mixture is heated, with stirring, to 90-95°. The monoethanolamide, the monoethanolamide stearate and the stearic acid are then slowly added, maintaining the temperature between 85° and 95°. When a homogeneous liquid is yielded, the solution is cooled to 86-90°. When this temperature is reached, the liquid is poured into a mould or into an applicator container. This is allowed to cool at room temperature or below until it is solid throughout.

In the above, a and b are thickening agents. Mineral oil, petrolatum and c are lubricity agents.

## Example 2

A.     The procedure of Example 1 is followed using the ingredients listed below.

| Ingredient | Weight % |
| --- | --- |
| Coconut monoethanolamide* .................. | 34.0 |
| Propylene glycol-3-myristyl ether .......... | 33.0 |
| Polydimethylcyclosiloxane [a] .............. | 18.0 |
| Water  ..................................... | 8.0 |
| (3-Phenoxyphenyl)methyl 3-(2,2-dichloroethen-yl)-2,2-dimethylcyclopropanecarboxylate.... | 5.0 |
| Stearic acid  ............................. | 2.0 |

a Cyclomethicone;  Silicon 344 (Dow Corning)
* Thickening agent.

B.     In the same way, there is prepared the following composition.

| Ingredient | Weight % |
| --- | --- |
| Coconut monoethanolamide*  ................. | 56.0 |
| Stearic monoethanolamide*  ................. | 15.0 |
| Propylene glycol-3-meristyl ether  ......... | 25.0 |
| 2-Isopropoxyphenyl methylcarbamate [a] ..... | 2.0 |
| Stearic acid  ............................. | 2.0 |

a Propoxur
* Thickening agent components

## Example 3

The methods of Example 1 are followed to prepare the following composition.

| Ingredient | Weight % |
| --- | --- |
| Stearic monoethanolamide | 35.0 |
| Propylene glycol-3-myristyl ether | 34.0 |
| Polydimethylcyclosiloxane | 19.0 |
| Water | 8.0 |
| 2,2-Dimethyl-1,3-benzodioxol-4-yl methyl-carbamate [a] | 2.0 |
| Stearic acid | 2.0 |

a Bendiocarb

## Example 4

A.　Following the procedure of Example 1, the composition below is prepared.

| Ingredient | Weight % |
| --- | --- |
| Stearic monoethanolamide | 28.6 |
| Stearic monoethanolamide stearate | 12.2 |
| Propylene glycol-3-meristyl ether | 15.2 |
| Petrolatum | 6.0 |
| Mineral oil | 36.0 |
| Isopropyl (E,E-11-methoxy-3,7,11-trimethyl-2,4-dodecadienoate [a] | 2.0 |

a Methoprene

B.　The above formulation is prepared as described, but with the compound cyano(3-phenoxyphenyl)methyl 4-(difluoromethoxy)-α-(1-methylethyl)benzeneacetate as the active ingredient rather than methoprene.

Example 5

The stick formulation to be tested is rubbed onto a 6" square glass plate, covering a 4-inch diameter circle with the material. One group of adult Blatella germanica (ten adults, mixed sex) is confined on the plate for fifteen minutes. At least two plates are run for each formulation. The cockroaches are removed after the fifteen-minute exposure period and are observed for percent mortality at 24 hours after exposure.

Formulation A and Formulation B (compositions of which are described below) were tested in this assay. Each formulation gave 95% mortality within 24 hours after exposure.

| Formulation A | |
|---|---|
| Ingredient | Weight % |
| Stearic monoethanolamide ................. | 25.0 |
| Propylene glycol-3-meristyl ether ........ | 34.0 |
| Polydimethylcyclosiloxane ............... | 19.0 |
| Water ................................. | 8.0 |
| (3-Phenoxyphenyl)methyl(±)cis/trans-3-(2,2-di-chloroethenyl)-2,2-dimethylcyclopropane-carboxylate [a] ........................ | 2.0 |
| Stearic acid ........................... | 2.0 |

a cis/trans isomer ratio = 75/25 ± 5

| Formulation B | |
| --- | --- |
| Ingredient | Weight % |
| Stearic monoethanolamide ................ | 26.6 |
| Stearic monoethanolamide stearate ....... | 12.2 |
| Propylene glycol-3-meristyl ether ....... | 15.2 |
| Petrolatum ............................. | 6.0 |
| Mineral Oil ........................... | 36.0 |
| (3-Phenoxyphenyl)methyl($\pm$)cis/trans-3-(2,2-di-chloroethenyl)-2,2-dimethylcyclopropane-carboxylate [a] ...................... | 2.0 |
| Stearic acid ........................... | 2.0 |

a  cis/trans isomer ratio = 75/25 $\pm$ 5

- 11 -

0046336

CLAIMS:

1.      A composition for insect control which comprises:

    (a)    about 0.1 to 30% of an insecticide;

    (b)    about 20 to 90% of a thickening agent selected from the monoethanolamides of fatty acids; and

    (c)    0 to 75% of a lubricity agent; said percentages being by weight of the total composition.

2.      A composition according to Claim 1 wherein the thickening agent is or includes a monoethanolamide of a fatty acid of fifteen to twenty-two carbon atoms.

3.      A composition according to Claim 2 wherein the thickening agent includes stearic monoethanolamide and stearic monoethanolamide stearate or coconut monoethanolamide.

4.      A composition according to Claim 2 wherein the thickening agent is solely stearic monoethanolamide.

5.      A composition according to any one of the preceding claims wherein the insecticide is a synthetic pyrethroid, a carbamate, an insect growth regulator, or mixture thereof.

0046336

6.       A composition for insect control according to any one of the preceding claims which comprises:

           (a)     about 0.5 to 15% of said insecticide;

           (b)     about 30 to 70% of said thickening agent; and

           (c)     about 10 to 65% of said lubricity agent.

7.       A composition according to Claim 6 which comprises:

           (a)     about 2 to 5% of said insecticide;

           (b)     about 30 to 40% of said thickening agent;

           (c)     about 55 to 65% of said lubricity agent;

and pH of the composition is between 4 and 7.

8.       A composition according to Claim 6 or Claim 7 wherein the insecticide is (3-phenoxyphenyl) methyl 3-(2,2-dichloroethenyl)-2,2-dimethylcyclopropanecarboxylate.

9.       An insecticide crayon stick made up of a composition according to any one of the preceding Claims.

10.       A method for the control of insects wherein a composition as claimed in any one of the preceding claims is rubbed onto a surface to be treated.